Europäisches Patentamt

European Patent Office

Office européen des brevets

(11) Numéro de publication: **0 192 553**
**B1**

(12) **FASCICULE DE BREVET EUROPEEN**

(45) Date de publication du fascicule du brevet:
25.04.90

(21) Numéro de dépôt: 86400265.4

(22) Date de dépôt: 07.02.86

(51) Int. Cl.⁴: **H02M 3/337,** H02M 5/458,
H02M 7/539, H05G 1/20,
H05G 1/32

(54) Alimentation haute tension continue, notamment pour tube émetteur de rayons X.

(30) Priorité: 12.02.85 FR 8501971

(43) Date de publication de la demande:
27.08.86 Bulletin 86/35

(45) Mention de la délivrance du brevet:
25.04.90 Bulletin 90/17

(84) Etats contractants désignés:
BE DE GB IT LU NL

(56) Documents cités:
EP-A- 0 108 336
EP-A- 0 146 853
FR-A- 2 184 732
FR-A- 2 415 415
FR-A- 2 455 844
US-A- 3 539 812
US-A- 4 200 795

(73) Titulaire: GENERAL ELECTRIC CGR S.A., 13, Square
Max-Hymans, F-75015 Paris(FR)

(72) Inventeur: Carbon, Claude, THOMSON-CSF
SCPI 19, avenue de Messine, F-75008 PARIS(FR)

(74) Mandataire: Ballot, Paul Denis Jacques et al, Cabinet
Ballot-Schmit 7, rue le Sueur, F-75116 Paris(FR)

## Description

La présente invention a pour objet une alimentation haute tension continue, notamment pour tube émetteur de rayons X. Elle peut néanmoins s'appliquer à d'autres domaines. Les alimentations concernées sont prévues pour être raccordées à un réseau général de distribution électrique.

La plupart de ces alimentations comportent aujourd'hui des générateurs haute fréquence. Le secteur y est redressé, filtré, la tension continue obtenue est ondulée à haute fréquence par un onduleur, la tension ondulée est élevée par un transformateur élévateur, puis elle est redressée et filtrée. Ce type d'alimentation fonctionne parfaitement quand le réseau est triphasé. Par contre en monophasé quelques problèmes se posent. En effet, entre deux alternances il y a un creux de tension. Dans ce creux l'onduleur ne peut pas tirer de puissance du réseau. L'utilisation de filtre LC pour emmagasiner de l'énergie au sommet de la sinusoïde de façon à la restituer pendant ce creux est inapplicable pour les puissances de l'ordre de 30 à 100 kw. Les filtres deviennent énormes tant en dimension qu'en coût. Une autre solution très traditionnelle consiste a élever directement la tension secteur monophasé et à la redresser après élévation. Mais la haute tension redressée suit le réseau et chute complètement dans les creux de tension entre alternances. Le spectre des rayons X émis s'étend alors dans une gamme vaste. C'est une solution de plus en plus rejetée. Son emploi est même prohibé dans certain pays.

La présente invention a pour objet de remédier aux inconvénients cités en proposant une alimentation où la haute tension est hachée. Elle n'est produite que pendant des durées courtes correspondant aux sommets des alternances du réseau monophasé. De cette manière on ne tire pas d'énergie du réseau lorsque celui-ci est à basse tension : le courant tube pendant ces arrêts est nul. Il n'y a alors pas de perte par effet Joule excessive dans le réseau.

Une solution à ce problème a déjà été proposée dans le document FR-A 2 184 732. Cependant dans ce document les commandes d'inhibition de prélèvement d'énergie au réseau et le commande de la régulation haute tension sont couplées et interfèrent.

Les problèmes ci-dessus sont résolus par les caractéristiques de la revendication 1.

L'invention sera mieux comprise à la lecture de la description qui suit et à l'examen des figures qui l'accompagent. Elles ne sont données qu'à titre indicatif et nullement limitatif de la portée de l'invention. Elles représentent :

- figure 1, une alimentation conforme à l'invention ;
- figures 2a à 2k, des diagrammes temporels de signaux intervenant dans l'alimentation de l'invention.

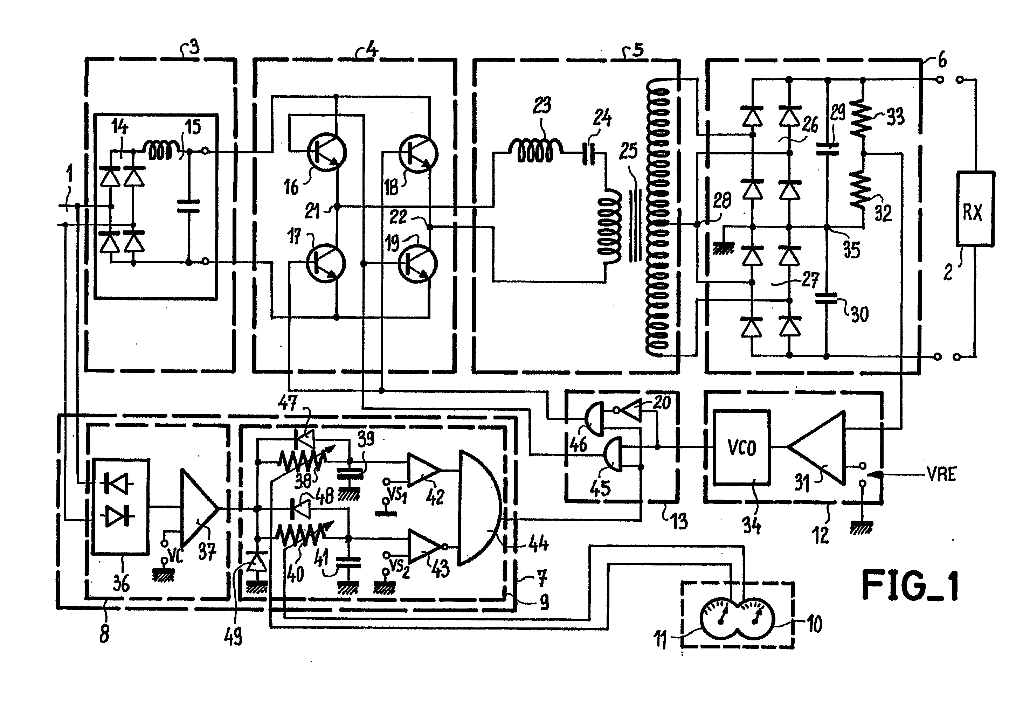

La figure 1 montre une alimentation haute tension conforme à l'invention. Elle reçoit l'énergie électrique d'un réseau monophasé 1 et la transforme en haute tension continue destinée à alimenter un tube 2 à rayons X. Elle comporte des premiers moyens 3 de redressement double alternance et de filtrage de la tension monophasée. Un onduleur 4 alimenté par le redresseur 3 débite dans des moyens élévateur de tensions 5. Dans un exemple, l'onduleur oscille à plusieurs dizaines de kilohertzs. Des deuxièmes moyens redresseurs 6 redressent et filtrent la haute tension alternative fournie par le transformateur 5. Ils débitent une haute tension continue dans le tube 2. Une caractéristique importante de l'invention est que cette chaine 3 - 6 fonctionne pour soutirer périodiquement de l'énergie du réseau 1 sous le pilotage de moyens 7 de synchronisation. Ces moyens de synchronisation comportent des moyens 8 pour reconnaître la phase du réseau. Ils comportent également des moyens 9 pour faire varier le calage de synchronisation par rapport à la phase du réseau, ou pour faire varier les durées de soutirage. Les moyens 9 sont en relation avec des commandes 10 et 11 sur lesquelles peut agir un opérateur.

Dans l'exemple représenté l'alimentation comporte en outre des moyens de régulation 12 qui règlent la haute tension produite par le deuxième redresseur 6 en fonction d'une référence VRE appliquée extérieurement. Dans une réalisation préférée les moyens de synchronisation 7 agissent sur des moyens de validation 13 du fonctionnement des moyens 12 de régulation. Autrement dit, lorsque les moyens de synchronisation le permettent, la haute tension régulée est débitée normalement. Lorsqu'ils ne le permettent plus, en particulier pendant les creux de tension du signal monophasé du réseau, la chaine de régulation est coupée, la haute tension en sortie s'annule.

Les premiers moyens de redressement 3 comportent classiquement des moyens de redressement double alternance 14 en cascade avec un filtre passe-bas 15. L'onduleur 4 comporte classiquement quatre transistors de puissance montés deux à deux en cascade, 16 - 17 et 18 - 19, entre les deux sorties du redresseur 3. Les bases des transistors opposés en diagonnale, 16 - 19 et 17 - 18, sont connectées ensemble. Elles reçoivent des ordres complémentaires de mise en conduction par l'intermédiaire d'un inverseur 20 des moyens 13 de validation. Les deux cascades de transistors fonctionnent alors comme des montages de type PUSH - PULL inversés l'un de l'autre. Leur point milieu, respectivement 21 et 22 est relié aux moyens élévateur de tension 5. Ici les moyens 5 comportent un circuit oscillant, avec une inductance 23 et une capacité 24, accordé sur une fréquence légèrement inférieure à la fréquence minimum à laquelle on s'attend à voir vibrer l'onduleur 4. Dans un exemple la fréquence propre de ce filtre vaut 18 kilohertzs. L'inductance 23 représente l'inductance 23 proprement dite ainsi que l'inductance de fuite d'un transformateur 25 en série qui sert à l'élévation de tension.

Le transformateur 25 débite dans les deuxièmes moyens de redressement 6. Ceux-ci comportent deux circuits de redressement double alternance respectivement 26 et 27. Ils sont chacun raccordés entre un point milieu 28 du transformateur 25 et respectivement l'une et l'autre des extrémités de l'enroulement secondaire de ce transformateur. Des moyens de lissage comportant par exemple deux capacités 29 et 30 permettent de filtrer le redressement double alternance respectivement des circuits 26 et 27. La haute tension apparaît alors sensiblement plate. Les capacités 29 et 30 sont faibles du fait que la haute tension alternative redressée est une tension haute fréquence. Le point milieu 35 des redresseurs 26 - 27 est relié à la masse. Il permet de diviser par deux, par rapport à celle-ci, la valeur de la haute tension produite. Les contraintes d'isolement des plots de la haute tension sont alors également divisées par deux.

L'intérêt du circuit oscillant 23 - 24 réside dans l'aspect sinusoïdal de la tension qu'il produit. Cette tension sinusoïdale d'une part franchit, plus aisément qu'un signal carré de même fréquence, le transformateur 25. D'autre part lors du redressement dans les redresseurs 26 et 27, la décroissance régulière du courant, ainsi que sa croissance régulière, à chaque demi-alternance est favorable à un bon déstockage des charges électroniques stockées au moment de la saturation dans les diodes de ces redresseurs. Cet aspect sinusoïdal est par ailleurs favorable à la diminution de la réinjection de parasites radioélectriques dans le réseau 1.

On verra plus loin que la régulation de l'alimentation est faite par modulation de fréquence. Les moyens de régulation 12 comportent en effet un modulateur de fréquence 34 (VCO). A haute tension maximum le circuit oscillant est légèrement désaccordé par excès : l'onduleur vibre par exemple à vingt kilohertzs alors que le circuit oscillant 23 -24 est accordé sur 18 kilohertzs. A haute tension minimum la fréquence d'oscillation de l'onduleur est plus élevée (par exemple 50 kilohertzs), le circuit oscillant est fortement désaccordé : il peut passer moins de puissance. Cette répartition en fréquence est prévue pour minimiser les pertes par commutation. En effet à haute tension maximum, la fréquence d'oscillation est la plus faible, les pertes par commutation sont donc les plus faibles. A haute tension minimum, la fréquence d'oscillation est la plus élevée, les pertes par commutation sont les plus fortes ; mais ce n'est pas gênant puisque dans ce cas la puissance demandée à l'alimentation est faible.

La boucle de régulation comporte un comparateur 31 qui reçoit sur une première entrée un signal provenant d'un pont diviseur 32 - 33 (qui mesure la haute tension produite), et qui reçoit sur une deuxième entrée une tension de référence VRE qui représente la haute tension à laquelle on veut faire fonctionner le tube 2. Le signal d'erreur produit par le comparateur 31 est introduit dans un modulateur de fréquence 34. Celui-ci produit par exemple un signal carré à une fréquence dépendant en définitive de la tension de référence VRE. Le signal carré est appliqué en même temps que son complémentaire sur les bases correspondantes des transistors de l'onduleur 4.

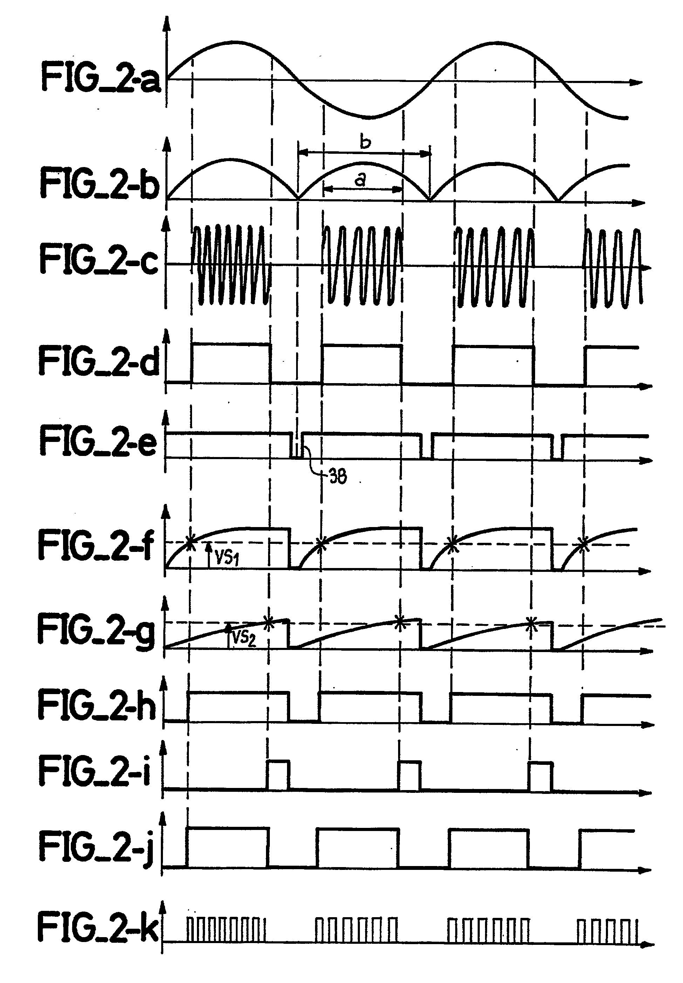

Les moyens de synchronisation comportent des moyens 8 de reconnaître la phase du signal secteur. Les moyens 8 comportent un redresseur double alternance 36 qui débite dans un comparateur 37. Le signal produit en sortie des moyens 8 est celui qui apparaît sur la figure 2e. La tension de comparaison VC à laquelle est comparé le signal redressé double alternance est suffisamment faible pour que le signal de sortie du comparateur 37 présente un front de montée 38 assez proche dans le temps de l'instant de passage à zéro entre deux alternances successives. Ce signal de repérage de phase est introduit dans les moyens 9 pour faire varier le calage. Ceux-ci comportent deux circuits RC respectivement 38 - 39 et 40 - 41. Les points milieu de ces circuits RC sont reliés à des premières entrées de comparateurs respectivement 42 et 43. Chaque comparateur reçoit sur sa deuxième entrée une tension de seuil : respectivement VS1 et VS2. Ces deux tensions peuvent être égales mais ce n'est pas une obligation. Le front de montée 38 du signal émanant du comparateur 37 ne se transmet pas immédiatement aux capacités 39 ou 41. Celles-ci ne sont chargées qu'au bout d'un temps dépendant de la constante de temps de leur circuits RC. Les diagrammes 2f et 2g montrent comment évoluent les potentiels aux bornes des capacités. Dans un exemple la constante de temps du circuit 38 - 39 est inférieure à la constante de temps du circuit 40 - 41. Dans cet exemple les seuils VS1 et VS2 étant égaux le comparateur 42 bascule avant le comparateur 43. Ceci est visible sur les diagrammes 2h et 2i. En reliant les sorties de ces comparateurs aux entrées d'une porte logique ET 44 (en ayant au préalable inversé la sortie du comparateur 43) on dispose en sortie de cette porte 44 d'un crénaux logique actif entre les dates où les comparateurs 42 et 43 ont basculé. Ceci apparaît sur le diagramme 2j.

Les circuits RC des moyens 9 sont chacun surmontés d'une diode 47 ou 48 pour décharger complètement les capacités 39 ou 41 à chaque changement de demi-alternance. Une diode 49 montée en parallèle à la sortie du comparateur 37 favorise cette décharge. Une autre particularité des circuits RC est que leur constante de temps est réglable. Par exemple les résistances 38 et 40 peuvent être réglées aux moyens des manettes graduées 10 et 11. En agissant sur ces manettes on détermine la date de mise en fonctionnement ainsi que la date d'arrêt de l'onduleur 4. On peut donc modifier la durée.

Le circuit de validation 13 comporte deux portes logiques ET respectivement 45 et 46 recevant sur une première de leurs entrées le signal de la porte ET 44. Sur leur deuxième entrée elles reçoivent le signal carré, ou son complémentaire, émanant du modulateur 34. Ces portes logiques délivrent donc des signaux impulsionnels comparables à celui du diagramme 2k. Pendant les durées actives, de durée *a* dans une durée *b* de demi-alternance, l'onduleur fonctionne. Le tube à rayons X est alimenté. En dehors des durées *a* les bases des transistors de l'onduleur sont portées à zéro, tous ces transistors sont bloqués, le tube à rayons X n'est plus alimenté.

Les diagrammes 2a à 2d présentent respectivement le signal du réseau, le signal redressé double alternance, le signal sinusoïdal en sortie de l'onduleur, et enfin le signal haute tension redressé filtré applicable aux bornes du tube à rayons X. La fréquence d'oscillation du signal ondulé est la même que la fréquence du signal délivré par les portes logique 45 et 46.

D'une manière préférée, par rapport à une demi-alternance correspondant à une rotation de phase de 180° la durée a de mise en fonctionnement de l'ondudeur 4 est comprise entre des dates où cette phase vaut 40° et 140°. On pourrait penser que cette manière d'agir a pour effet d'augmenter le temps de pose nécessaire à la réalisation d'un cliché radiographique. En fait il n'en est rien. Pour la durée de fonctionnement a évoquée, si la valeur crête de la tension continue hachée est de l'ordre de 90 % de la valeur crête d'une tension redressée double alternance, on peut établir que les temps de pose sont quasiment identiques. Par ailleurs les images obtenues dans l'invention sont meilleures puisque pendant toute la pose la tension d'alimentation évolue peu. Avec une haute tension redressée double alternance (100 hertzs) le spectre émis emprunte toute la gamme du fait des creux de tension.

Par comparaison à une alimentation classique où la tension continue ne serait pas hachée les temps de pose sont augmentés dans le rapport b/a. Or ces solutions classiques ne sont que théoriques en monophasé du fait des capacités et des inductances trop importantes qu'elles requièrent. On a pu établir en particulier que les éléments de filtrage (29 ou 30) peuvent être réduits dans un rapport 4 alors que le temps de pose n'est même pas doublé. Il est possible par ailleurs d'effectuer des réglages de telle manière qu'à haute tension faible le rapport cyclique a/b soit plus élevé. On agit alors sur les manettes 10 et 11. Des mesures comparatives ont été effectuées. Elles ont permis d'établir que le courant crête absorbé au réseau 1 était bien inférieur dans l'invention à celui mesuré avec un générateur à haute tension continue permanente. Ceci est dû essentiellement au fait que la charge 2 ne soutire pas de courant quand la tension sur le réseau est faible : c'est-à-dire pendant les creux de tension. Le rendement de consommation est bien supérieur dans le cas de l'invention. En particulier l'énergie électrique prélevée sous forme d'un courant est dissipé en partie par le réseau lui-même car celui-ci qui n'est pas parfaitement conducteur. De ce point de vue, plus la résistance interne du réseau est élevée plus la comparaison est favorable à l'invention.

**Revendications**

1. Alimentation (3–6) haute tension continue, du type recevant l'énergie électrique alternative d'un réseau (1) général monophasé de distribution, comportant des moyens (7) pour soutirer périodiquement de l'énergie du réseau pendant des durées (a) inférieures à une demi-alternance (b) et pour produire ainsi une haute tension continue hachée périodiquement, des premiers moyens (3) de redressement reliés au réseau, un onduleur (4) relié aux premiers moyens de redressement, des moyens (5) d'élévation de la tension produite par l'onduleur, et des deuxièmes moyens (6) de redressement et de filtrage reliés aux moyens d'élévation, cette alimentation comportant des moyens (12) de réguler la haute tension produite, caractérisée en ce que les moyens de régulation comportent un modulateur de fréquence (34) pour moduler l'onduleur en fréquence en fonction de la tension de sortie haute tension de l'alimentation, et en ce que les moyens de synchronisation (7) pour suivre la phase du réseau et pour valider temporellement le fonctionnement de ce modulateur, lesdits moyens de synchronisation dépendant directement d'un signal prélevé sur le réseau.

2. Alimentation selon la revendication 1, caractérisée en ce que les moyens de synchronisation comportent des moyens (9, 10, 11) pour faire varier le calage de synchronisation par rapport à la phase du réseau.

3. Alimentation selon la revendication 1 ou la revendication 2, caractérisée en ce que les premiers et deuxièmes moyens de redressement sont double alternance.

4. Alimentation selon l'une quelconque des revendications 1 à 3, caractérisée en ce que les moyens de synchronisation comportent des moyens pour augmenter ou réduire les durées se soutirage indépendamment de la tension du réseau.

5. Alimentation selon l'une quelconque des revendications 1 à 4, caractérisée en ce que le modulateur de fréquence (34) est désaccordé par excès par rapport à une fréquence de résonance de l'onduleur (4) et en ce que des moyens (20) sont prévus pour que la fréquence de ce modulateur évolue en sens inverse de la consigne de la haute tension à réguler.

**Claims**

1. A DC high voltage power supply (3–6) adapted to run on AC electric power from a communal single phase supply line (1), comprising means (7) to periodically abstract power from the line during times (a) less than a half an alternation (b) and to thus produce periodically chopped DC high voltage, first rectifying means (3) connected with the line, an inverter (4) connected with the first rectifying means, means (5) for stepping up the voltage produced by the inverter, and second means (6) for rectifying and filtering connected with the step-up means, said power supply comprising means (12) for regulating the high voltage produced, characterized in that the regulating means comprise a frequency modulator (34) in order to frequency modulate the inverter as a function of the high voltage output of the power supply and in that the means for periodically abstracting comprise synchronizing means (7) in order to keep in phase with the phase of the line and in order to cause time validation of the function of this modulator (2), the said means for synchronizing depending directly on a signal taken from the line.

2. The power supply as claimed in claim 1, characterized in that the synchronizing means comprising means (9, 10 and 11) in order to vary the synchronization phasing in relation to the phase of the line.

3. The power supply as claimed in claim 1 or claim 2, characterized in that the first and the second rectifying means are of the full wave type.

4. The power supply as claimed in any one of the claims 1 through 3, characterized in that the means for synchronization comprise means to augment or reduce the times of abstraction independently of the line voltage.

5. The power supply as claimed in any one of the claims 1 through 4, characterized in that the frequency modulator (34) is tuned out excesswise in relation to a resonant frequency of the inverter (4) and in that means (20) are provided to cause the frequency of this modulator to vary in the opposite direction to the set point of the high voltage to be regulated.

## Patentansprüche

1. Stromversorgungsgerät (3-6) für hohe Gleichspannung, vom dem Typ, der die elektrische Energie aus einem allgemeinen Einphasen-Wechselstrom-Verteilungsnetz (1) erhält, mit Mitteln (7) zur periodischen Entnahme von Energie aus dem Netz während Dauern (a), die niedriger als eine halbe Halbperiode sind, und um auf diese Weise eine periodisch zerhackte hohe Gleichspannung zu erzeugen, mit ersten mit dem Netz verbundenen Gleichrichtungsmitteln (3), einem an die ersten Gleichrichtungsmittel angeschlossenen Wechselrichter (4), mit Mitteln (5) zur Steigerung der vom Wechselrichter erzeugten Spannung, und mit zweiten an die Steigerungsmittel angeschlossenen Gleichrichtungs- und Filterungsmitteln (6), wobei dieses Stromversorgungsgerät Mittel (12) zur Regulierung der erzeugten Hochspannung enthält, dadurch gekennzeichnet, daß die Reguliermittel einen Frequenzmodulator (34) enthalten, um den Wechselrichter in der Frequenz abhängig von der Hochspannungs-Ausgangsspannung der Stromversorgung zu modulieren, und dadurch, daß die Mittel zur periodischen Energieentnahme Synchronisationsmittel (7) enthalten, um der Netzphase zu folgen und den Betrieb dieses Modulators zeitlich freizugeben, wobei diese Synchronisationsmittel unmittelbar von einem aus dem Netz entnommenen Signal abhängen.

2. Stromversorgungsgerät nach Anspruch 1, dadurch gekennzeichnet, daß die Synchronisationsmittel Mittel (9, 10, 11) enthalten, um die Synchronisationseinstellung im Verhältnis zur Netzphase variieren zu lassen.

3. Stromversorgungsgerät nach Anspruch 1 oder Anspruch 2, dadurch gekennzeichnet, daß die ersten und zweiten Gleichrichtungsmittel Vollwegtypen sind.

4. Stromversorgungsgerät nach einem der Ansprüche 1 bis 3, dadurch gekennzeichnet, daß die Synchronisationsmittel Mittel enthalten, um die Entnahmedauern unabhängig von der Netzspannung zu reduzieren.

5. Stromversorgungsgerät nach einem der Ansprüche 1 bis 4, dadurch gekennzeichnet, daß der Frequenzmodulator (34) im Verhältnis zu einer Resonanzfrequenz des Wechselrichters (4) durch Übermaß verstimmt ist und daß Mittel (20) vorgesehen sind, damit die Frequenz dieses Modulators umgekehrt vom Sollwert der zu regulierenden Hochspannung verläuft.

FIG_1

EP 0 192 553 B1

FIG_2-a

FIG_2-b

FIG_2-c

FIG_2-d

FIG_2-e

FIG_2-f

FIG_2-g

FIG_2-h

FIG_2-i

FIG_2-j

FIG_2-k